(19) Europäisches Patentamt
European Patent Office
Office européen des brevets

(11) **EP 1 871 017 A1**

(12) **EUROPEAN PATENT APPLICATION**

(43) Date of publication:
**26.12.2007 Bulletin 2007/52**

(51) Int Cl.:
*H04B 7/06* (2006.01)        *H04L 25/03* (2006.01)
*H04L 1/06* (2006.01)

(21) Application number: **06291045.0**

(22) Date of filing: **23.06.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(71) Applicants:
• **Mitsubishi Electric Information Technology Centre Europe B.V.**
**1119 NS  Schiphol Rijk (NL)**
Designated Contracting States:
**FR**
• **MITSUBISHI DENKI KABUSHIKI KAISHA**
**Chiyoda-ku, Tokyo 100-8310 (JP)**
Designated Contracting States:
**AT BE BG CH CY CZ DE DK EE ES FI GB GR HU IE IS IT LI LT LU LV MC NL PL PT RO SE SI SK TR**

(72) Inventor: **Hara, Yoshitaka,**
**Mitsubishi Electric ITE**
**35708 Rennes Cedex 7 (FR)**

(74) Representative: **Maillet, Alain**
**Cabinet le Guen & Maillet,**
**5, Place Newquay,**
**B.P. 70250**
**35802 Dinard Cedex (FR)**

(54) **Method and device for reporting, through a wireless network, a channel state information between a first telecommunication device and a second telecommunication device**

(57) The present invention concerns a method for reporting, through a wireless network, a channel state information between a first telecommunication device which comprises $M_k$ antennas and a second telecommunication device which comprises antennas. The method comprises the steps executed by the first telecommunication device of:
- determining the propagation gains between the antennas of the first and second telecommunication devices,
- determining, from the propagation gains, a linear transform of a dimension of $m_0 * M_k$ with $m_0 < M_k$,
- transferring information representative of the linear transform to the second telecommunication device.

Fig. 1

**Description**

The present invention relates generally to telecommunication systems and in particular, to a method and a device for reporting, through a wireless network, a channel state information between a first telecommunication device and a second telecommunication device.

Recently, efficient transmission schemes in space and frequency domains have been investigated to meet the growing demand for high data rate wireless telecommunications. In the space domain, Multi-Input Multi-Output (MIMO) systems using multiple antennas at both transmitter and receiver sides have gained attention to exploit the potential increase of the spectral efficiency.

In some transmission schemes using MIMO systems, the telecommunication device which transmits data streams has some knowledge of the channel conditions which exist between itself and the telecommunication devices to which the data streams are transferred. The telecommunication device directs the signals transferred to a telecommunication device according to the channel conditions, and then improves the overall performances of the system.

Practically, when the channels responses between uplink and downlink channels are reciprocal, e.g. in Time Division Multiplex systems, the channel conditions are obtained according to the following method : a telecommunication device like a base station transfers pilot signals to another telecommunication device like a mobile terminal, the mobile terminal receives the pilot signals, determines the channel responses from the received pilot signals, as example under the form of a channel matrix which is representative of the channel conditions, and uses the determined matrix in order to direct the signals which have to be transferred to the base station which has sent the pilot signals.

The coefficients of the determined channel matrix are the complex propagation gains between the antennas of the base station and the antennas of the mobile terminal.

Some of the complex propagation gains reflect poor channel propagation conditions which exist between some antennas of the base station and the mobile terminal.

Furthermore, if the mobile terminal needs to report all coefficients of the determined channel matrix to the base station, the transfer of these coefficients requires an important part of the available bandwidth of the overall wireless telecommunication network.

The aim of the invention is therefore to propose methods and devices which allow a telecommunication device to be able to use only a limited number of the channels which exist between its antennas and the antennas of another telecommunication device.

Furthermore, the aim of the invention is therefore to propose methods and devices which allow a telecommunication device to report complex propagation gains between its antennas and the antennas of another telecommunication device without requiring an important part of the available bandwidth of the overall wireless network.

To that end, the present invention concerns a method for reporting, through a wireless network, a channel state information between a first telecommunication device which comprises $M_k$ antennas and a second telecommunication device which comprises antennas, characterised in that the method comprises the steps executed by the first telecommunication device of:

- determining the propagation gains between the antennas of the first and second telecommunication devices,
- determining, from the propagation gains, a linear transform of a dimension of $m_0 * M_k$ with $m_0 < M_k$,
- transferring information representative of the linear transform to the second telecommunication device.

The present invention concerns also a device for reporting, through a wireless network, a channel state information between a first telecommunication device which comprises $M_k$ antennas and a second telecommunication device which comprises antennas, characterised in that device for reporting is included in the first telecommunication device and comprises:

- means for determining the propagation gains between the antennas of the first and second telecommunication devices,
- means for determining, from the propagation gains, a linear transform of a dimension of $m_0 * M_k$ with $m_0 < M_k$,
- means for transferring $m_0$ pilot signals to the second telecommunication device the pilot signals being multiplied by the linear transform.

Thus, the first telecommunication device is able to use only a limited number of the channels which exist between its antennas and the antennas of another telecommunication device.

As example, when the propagation gains between one of the antenna of the first telecommunication device and the antennas of the second telecommunication are low, the first telecommunication device doesn't report any of these propagation gains. The second telecommunication device interprets that the first telecommunication device has a reduced number of antennas in comparison with the real number of antennas the first telecommunication device has.

According to a particular feature, the information representative of the linear transform is transferred by transferring $m_0$ pilot signals to the second telecommunication device, the pilot signals being multiplied by the linear transform.

According to a particular feature, $m_0$ is strictly upper than one.

According to the first mode of realisation of the present invention, the channel state information is representative of the downlink channel and the linear transform which weights the signals representative of a group of data received by the first telecommunication device.

Thus, the first telecommunication device can report a channel state information which is representative of the subset of the downlink linear transform without decreasing in an important manner the bandwidth which is used for classical data transmission.

According to a particular feature of the first mode of realisation, the determined propagation gains between the antennas of the first and second telecommunication devices are under the form of a downlink channel matrix.

According to a particular feature of the first mode of realisation, the linear transform is a downlink linear transform is determined by :

- executing a singular value decomposition of the downlink channel matrix,
- selecting a part of eigenvectors obtained from the singular value decomposition.

Thus, by doing a singular value decomposition, the selection of the propagation gains is efficient.

According to a first variant of the first mode of realisation, the downlink linear transform is equal to :

$$V_{DL} = \left[ e_1 \left\langle H^{\star}_{DL,k} H^{T}_{DL,k} \right\rangle, \dots e_{m0} \left\langle H^{\star}_{DL,k} H^{T}_{DL,k} \right\rangle \right],$$ where $e_m \langle . \rangle$, with $m$=1 to $m_0$, denotes the eigenvector of $\langle . \rangle$

corresponding to the selected eigenvalues of $\langle . \rangle$, $H_{DL,k}$ is the downlink channel matrix, $H^{\star}_{DL,k}$ is the conjugate of $H_{DL,k}$

and $H^{T}_{DL,k}$ is the transpose of $H_{DL,k}$.

Thus, the determination of the downlink linear transform is simple to execute.

According to a second variant of the first mode of realisation, the first telecommunication device further determines an interference plus noise correlation matrix and the downlink linear transform is equal to :

$$V_{DL} = \left[ e_1 \left\langle H^{\star}_{DL,k} \Phi^{-1} H^{T}_{DL,k} \right\rangle, \dots e_{m0} \left\langle H^{\star}_{DL,k} \Phi^{-1} H^{T}_{DL,k} \right\rangle \right], \quad \Phi^{-1}$$ is the inverse of the interference plus noise correlation matrix.

Thus, the determination of the downlink linear transform takes also into account the interference plus noise components received by the first telecommunication device.

According to a third variant of the first mode of realisation, the wireless network comprises a plurality of frequency subbands and in that a downlink linear transform is determined for each frequency subband and $m_0$ pilot signals are transferred for each frequency subband.

Thus, the present invention is also applicable for wireless networks which provide a plurality of frequency subbands.

According to a fourth variant of the first mode of realisation, the wireless network comprises a plurality of frequency subbands and in that the downlink linear transform is determined for the frequency subbands.

Thus, the first telecommunication device reports channel state information without decreasing in an important manner the bandwidth which is used for classical data transmission.

According to a fifth variant of the first mode of realisation, the first telecommunication device :

- determines a power coefficient from the propagation gains,
- multiplies the $m_0$ pilot signals by the power coefficient,
- transfers an information representative of the power coefficient to the second telecommunication device.

According to a sixth variant of the first mode of realisation, the first telecommunication device determines an interference plus noise correlation matrix and the downlink linear transform is determined by :

- executing a singular value decomposition of the interference plus noise correlation matrix $\Phi = F \Lambda F^H$,
- determining a matrix $D = \Lambda^{-1/2} F^H$,

- executing a singular value decomposition of $\left( D H_{DL,k} \right)^T = \hat{U} \hat{\Lambda} \hat{Q}^H$, where $\hat{Q} = [q_1, \dots, q_{Mk}]$ and $M_k$ is the number

of antennas of the first telecommunication device,

- selecting a part of singular-values obtained from the singular value decomposition of $\left(DH_{DL,k}\right)^{T} = \hat{U}\hat{\Lambda}\hat{Q}^{H}$,

- selecting the vectors corresponding to the selected singular-values.

Thus, the first telecommunication device whitens the interference plus noise components for the selection of the propagation gains.

According to the sixth variant of the first mode of realisation, the downlink linear transform is equal to $V_{DL} = [\boldsymbol{D}^{T}q_1 ,..., \boldsymbol{D}^{T}q_{m0}]$, where $\boldsymbol{q}_1 ,..., \boldsymbol{q}_{m0}$ are the selected vectors.

Thus, the downlink linear transform is simple to determine.

According to a second mode of realisation of the present invention, the linear transform is an uplink linear transform which weights the signals representative of a group of data transferred by the first telecommunication device to the second telecommunication device and the determined propagation gains between the antennas of the first and second telecommunication devices are under the form of an uplink channel matrix.

Thus, the first telecommunication device is able to use only a limited number of the channels which exist between its antennas and the antennas of the second telecommunication device.

According to the second mode of realisation of the present invention, the uplink linear transform is determined by :

- executing a singular value decomposition of the uplink channel matrix,
- selecting a part of eigenvectors obtained from the singular value decomposition.

Thus, by doing a singular value decomposition, the selection of the propagation gains is efficient.

Furthermore, the first telecommunication reports only a limited part of the propagation gains and uses only the channels between the antennas of the first and the second telecommunication device which correspond to the reported propagation gains.

According to the first and second modes of realisation of the present invention, the first telecommunication device :

- determines a power coefficient from the propagation gains,
- multiplies the $\boldsymbol{m}_0$ pilot signals by the power coefficient,
- transfers an information representative of the power coefficient to the second telecommunication device.

According to the first and second modes of realisation of the present invention, the second telecommunication device :

- obtains from the received pilot signals a channel state information,
- controls the transfer of the signals representative of the group of data between the first and the second telecommunication devices according to the channel state information.

Thus, the second telecommunication device is informed about the propagation gains between a part of its antennas and some of the first telecommunication device antennas without decreasing in an important manner the bandwidth which is used for classical data transmission.

According to a particular feature of the first mode of realisation, the control of the transfer of the signals between the first and the second telecommunication devices is the control of signals representative of the group of data transferred to the first telecommunication device.

Thus, the second telecommunication device is able to control the transfer of signals in the downlink channel.

According to a particular feature, the channel state information is received from the first telecommunication device.

Thus, the second telecommunication device can reduce the problems generated by low propagation gains.

According to a particular feature of the first mode of realisation, the control of the transfer of signals representative of a group of data to the first telecommunication device is the determination of the modulation and coding scheme to be used for transferring at least signals representative of a group of data to the first telecommunication device.

Thus, the transfer of signals representing groups of information between the first and the second telecommunication devices is made according to propagation gains.

According to a particular feature of the first mode of realisation, the second telecommunication device receives channel state information from plural first telecommunication devices and the control of the transfer of signals representative of a group of data to the first telecommunication device is the determination to which first telecommunication device or devices among the plural first telecommunication devices, signals representing at least a group of data have to be transferred.

Thus, it is possible to allocate the radio resources of the wireless network in an efficient way.

According to a particular feature of the second mode of realisation, the control of the transfer of the signals between the first and the second telecommunication devices is the control of signals representative of the group of data transferred by the first telecommunication device.

Thus, the second telecommunication device is able to control the transfer of signals in the uplink channel.

According to a particular feature of the second mode of realisation, the control of the transfer of signals representative of a group of data to the first telecommunication device is the determination of the transmission power to be used for transferring signals representative of a group of data, by the first telecommunication device and/or information enabling the first telecommunication device to weight the signals transferred in the uplink channel.

Thus, the second telecommunication device can reduce the problems generated by low propagation gains.

According to a particular feature of the second mode of realisation, the control of the transfer of signals representative of a group of data by the first telecommunication device is the determination of the modulation and coding scheme to be used for transferring at least signals representative of a group of data.

Thus, the transfer of signals representing groups of information in the uplink channel is made according to propagation gains.

According to a particular feature of the second mode of realisation, the second telecommunication device receives channel state information from plural first telecommunication devices and the control of the transfer of signals representative of a group of data is the determination of the first telecommunication device among the plural first telecommunication devices, which has to transfer signals representing at least a group of data.

Thus, it is possible to allocate the radio resources of the wireless network in an efficient way.

According to still another aspect, the present invention concerns a system for controlling the transfer, through a wireless network of signals representative of a group of data between a first telecommunication device which comprises $M_k$ antennas and a second telecommunication device, which comprises antennas characterised in that first telecommunication device comprises :

- means for determining the propagation gains between the antennas of the first and second telecommunication devices,
- means for determining, from the propagation gains, a linear transform of a dimension of $m_0 * M_k$ with $m_0 < M_k$.
- means for transferring $m_0$ pilot signals to the second telecommunication device, the pilot signals being multiplied by the linear transform.
  and the second telecommunication device comprises :

- means for obtaining from the received pilot signals a channel state information,
- means for controlling the transfer of the signals representative of the group of data between the first and the second telecommunication devices according to the channel state information.

Since the features and advantages relating to the system are the same as those set out above related to the method and device according to the invention, they will not be repeated here.

According to still another aspect, the present invention concerns computer programs which can be directly loadable into a programmable device, comprising instructions or portions of code for implementing the steps of the methods according to the invention, when said computer programs are executed on a programmable device.

Since the features and advantages relating to the computer programs are the same as those set out above related to the method and device according to the invention, they will not be repeated here.

According to still another aspect, the present invention concerns a signal transferred by a first telecommunication device to a second telecommunication device through a wireless network, the signal comprising a channel state information between a first telecommunication device which comprises antennas and a second telecommunication device which comprises antennas, characterised in that the channel state information is representative of a linear transform of a dimension of $m_0 * M_k$ determined from the propagation gains between the antennas of the first and second telecommunication devices.

Since the features and advantages relating to the signal are the same as those set out above related to the methods and devices according to the invention, they will not be repeated here.

The characteristics of the invention will emerge more clearly from a reading of the following description of an example embodiment, the said description being produced with reference to the accompanying drawings, among which :

Fig. 1 is a diagram representing the architecture of the wireless network according to the present invention ;

Fig. 2 is a diagram representing the architecture of a first telecommunication device according to the present invention;

Fig. 3 is a diagram representing the architecture of a channel interface of the first telecommunication device;

Fig. 4 is a diagram representing the architecture of the second telecommunication device according to the present invention;

Fig. 5 is an algorithm executed by the first telecommunication device for the downlink channel according to the present invention;

Fig. 6 is an algorithm executed by the first telecommunication device for the uplink channel according to the present invention;

Fig. 7 is an algorithm executed by the second telecommunication device for determining, from channel state information on downlink channels the first telecommunication device which has to transfer at least one group of data and how to transfer the at least one group of data on the downlink channel, according to the present invention;

Fig. 8 is an algorithm executed by the second telecommunication device for determining, from channel state information on uplink channels, the first telecommunication device which has to transfer at least one group of data and how to transfer the at least one group of data on the uplink channel according to the present invention.

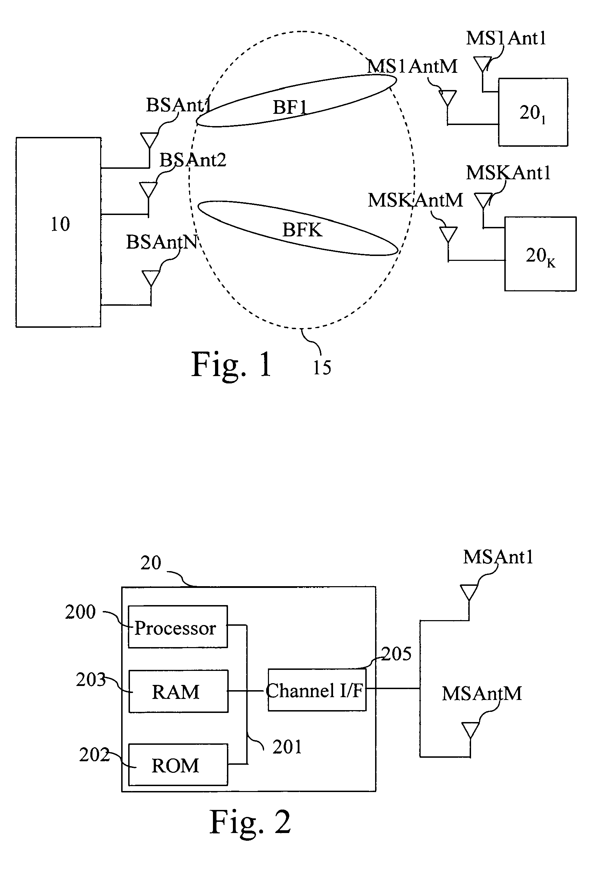

**Fig. 1** is a diagram representing the architecture of the wireless network according to present invention.

In the wireless network of the Fig. 1, at least one and preferably plural first telecommunication devices $20_l$ or $20_k$ are linked through a wireless network 15 to a second telecommunication device 10 using an uplink and a downlink channel.

Preferably, and in a non limitative way, the second telecommunication device 10 is a base station or a node of the wireless network 15. The first telecommunication devices $20_l$ to $20_K$ are terminals like mobile phones, personal digital assistants, or personal computers.

The telecommunication network 15 is a wireless telecommunication system which uses Time Division Duplexing scheme (TDD) or Frequency Division Duplexing scheme (FDD).

In TDD scheme, the signals transferred in uplink and downlink channels are duplexed in different time periods in the same frequency band. The signals transferred within the wireless network 15 share the same frequency spectrum. The channel responses between the uplink and downlink channels of the telecommunication network 15 are reciprocal.

Reciprocal means that if the downlink channel conditions are represented by a downlink matrix, the uplink channel conditions can be expressed by an uplink matrix which is the transpose of the downlink matrix.

In FDD scheme, the signals transferred in uplink and downlink channels are duplexed in different frequency bands. The spectrum is divided into different frequency bands and the uplink and downlink signals are transmitted simultaneously. The channel responses between the uplink and downlink channels of the telecommunication network 15 are not perfectly reciprocal.

The second telecommunication device 10 transfers simultaneously signals representatives of at most $N$ groups of data or pilot signals to the first telecommunication devices $20_l$ to $20_k$ through the downlink channel and the first telecommunication devices $20_l$ to $20_k$ transfer signals to the second telecommunication device 10 through the uplink channel.

The signals transferred by the first telecommunication devices $20_l$ to $20_K$ are signals representatives of a group of data or pilot signals. The pilot signals transferred by the first telecommunication devices $20_l$ to $20_k$ are multiplied by a downlink linear transform and preferably further weighted by a power coefficient determined from the downlink linear transform. The pilot signals transferred by the first telecommunication devices $20_l$ to $20_K$ are multiplied by an uplink linear transform and preferably further weighted by a power coefficient determined from the uplink linear transform.

A group of data is as example a frame constituted at least by a header field and a payload field which comprises classical data like data related to a phone call, or a video transfer and so on.

Pilot signals are predetermined sequences of symbols known by the telecommunication devices. Pilot signals are, as example and in a non limitative way, Walsh Hadamard sequences.

The second telecommunication device 10 has $N$ antennas noted BSAnt1 to BSAntN. The second telecommunication device 10 preferably controls the spatial direction of the signals transferred to each first telecommunication devices $20_1$ to $20_K$ according to at least signals transferred by each first telecommunication devices 20 as it will be disclosed hereinafter.

More precisely, when the second telecommunication device 10 transmits signals representatives of a group of data to a given first telecommunication device $20_k$ through the downlink channel, the signals are at most $N$ times duplicated in order to perform beamforming, i.e. controls the spatial direction of the transmitted signals.

The ellipse noted BF1 in the Fig. 1 shows the pattern of the radiated signals by the antennas BSAnt1 to BSAntN which are transferred to the first telecommunication device $20_1$ by the second telecommunication device 10.

The ellipse noted BFK in the Fig. 1 shows the pattern of the radiated signals by the antennas BSAnt1 to BSAntN which are transferred to the first telecommunication device $20_k$ by the second telecommunication device 10.

The first telecommunication devices $20_1$ to $20_k$ have $M_k$ antennas noted respectively MS1 Ant1 to MS1 $AntM_l$

and MSKAnt1 to MSKAntM$_k$. It has to be noted here that the number $M_k$ of antennas may vary according to each first telecommunication device $20_k$ with $k$=1 to $K$. Each first telecommunication device $20_l$ to $20_k$ controls the spatial direction of the signals transferred to the second telecommunication device 10 as it will be disclosed hereinafter.

Each first telecommunication device $20_1$ to $20_k$ controls the spatial direction of the signals transferred to the second telecommunication device 10 by $M_k$ times duplicating the signals and weighting the duplicated signals by coefficients in order to perform beamforming, i.e. controls the spatial direction of the transmitted signals.

According to a variant of realisation of the present invention, the coefficients used for weighting the duplicated signals are transferred by the second telecommunication device 10.

The ellipse noted BF1 in the Fig. 1 shows the pattern of the radiated signals by the antennas MS1 Ant1 to MS1AntM$_1$ which are transferred by the first telecommunication device $20_1$ to the second telecommunication device 10.

The ellipse noted BFK in the Fig. 1 shows the pattern of the radiated signals by the antennas MSKAntl to MSKAntM$_k$ which are transferred by the first telecommunication device $20_K$ to the second telecommunication device 10.

Each first telecommunication device $20_k$ transfers, through its antennas MSkAnt1 to MSkAntM$_k$, the signals to the second telecommunication device 10. More precisely, when the first telecommunication device $20_k$ transmits signals to the second telecommunication device 10 through the uplink channel, the signals are linear transformed in order to form $M_k$ signals from $m_0$ signals, with $m_0 < M_k$, in order to use, as example, the propagation channels which have the highest complex propagation coefficients.

Preferably and in a non limitative way, the power of the pilot signals transferred by each first telecommunication device $20_k$ is adjusted according to the propagation coefficients measured on the downlink channel.

Preferably and in a non limitative way, the power of the signals representative of a group of data transferred by each first telecommunication device $20_k$ is adjusted according to a power information transferred by the second telecommunication device 10.

Each first telecommunication device $20_k$ receives through the antennas MSkAnt1 to MSkAntM$_k$, the signals transferred by the second telecommunication device 10. More precisely, when the first telecommunication device $20_k$ receives signals from the second telecommunication device 10 through the downlink channel, the $M_k$ received signals, after being weighted for beamforming purpose, are linear transformed in order to form $m_0$ signals, with $m_0 < M_k$.

**Fig. 2** is a diagram representing the architecture of a first telecommunication device according to the present invention.

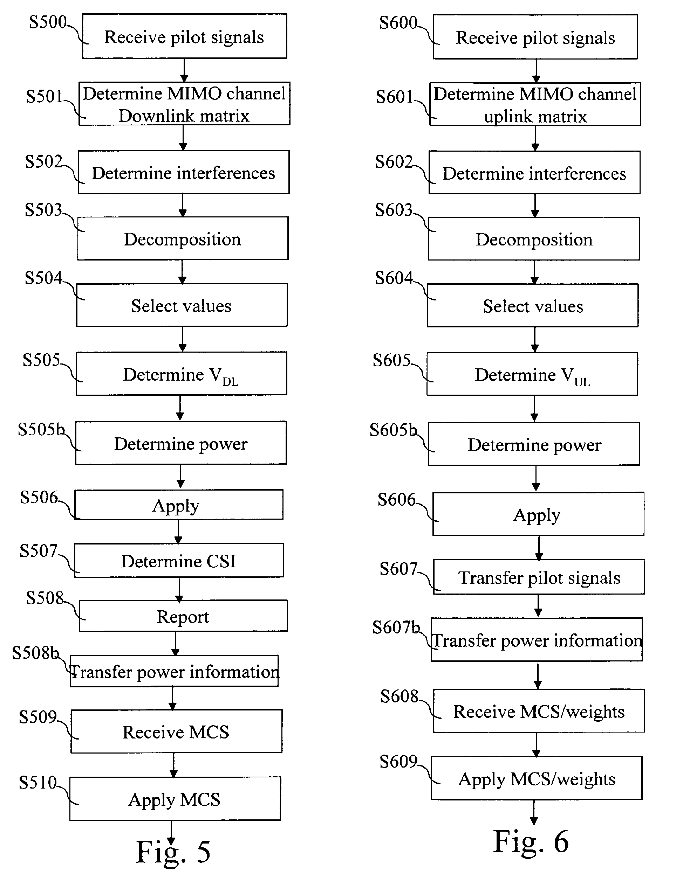

The first telecommunication device 20, as example the first telecommunication device $20_k$ ,with $k$ comprised between 1 and $K$, has, for example, an architecture based on components connected together by a bus 201 and a processor 200 controlled by programs related to the algorithms as disclosed in the Figs. 5 and/or 6.

It has to be noted here that the first telecommunication device 20 is, in a variant, implemented under the form of one or several dedicated integrated circuits which execute the same operations as the one executed by the processor 200 as disclosed hereinafter.

The bus 201 links the processor 200 to a read only memory ROM 202, a random access memory RAM 203 and a channel interface 205.

The read only memory ROM 202 contains instructions of the programs related to the algorithms as disclosed in the Figs. 5 and/or 6 which are transferred, when the first telecommunication device $20_k$ is powered on to the random access memory RAM 203.

The RAM memory 203 contains registers intended to receive variables, and the instructions of the programs related to the algorithm as disclosed in the Figs. 5 and/or 6.

The channel interface 205 enables the transfer and/or of the reception of signals to and/or from the second telecommunication device 10. The channel interface 205 comprises means for directing the signals representatives of groups of data transferred by the first telecommunication device $20_k$ to the second telecommunication device 10, means for determining the propagation gains between the antennas of the first and second telecommunication devices in the downlink channel and/or in the uplink channel, means for multiplying the received signals by a downlink linear transform.

The channel interface 205 comprises means for multiplying the transferred signals by an uplink linear transform. The channel interface 205 comprises means for multiplying the transferred pilot signals by a power coefficient determined by the first telecommunication device $20_k$. The channel interface 205 comprises means for adjusting the power of the transferred signals representative of a group of data from a power information received from the second telecommunication device 10.

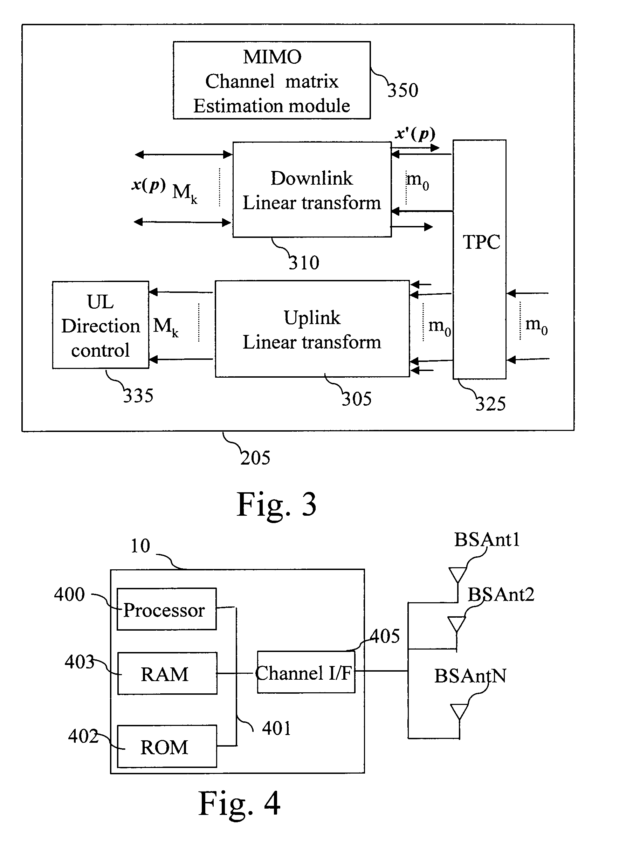

The channel interface 205 will be described in detail in reference to the Fig. 3.

**Fig. 3** is a diagram representing the architecture of a channel interface of the first telecommunication device.

The channel interface 205 comprises a MIMO channel matrix estimation module 350.

The MIMO channel matrix estimation module 350 receives the $M_k$*1 signals $x_k(p)=H_{DL,k}s(p)+z_k(p)$, where, $s(p) = [s_1(p),...,s_{N'}(p)]^T$ are signals representative of the p-th pilot symbol transferred by the second telecommunication device 10, $z_k(p)$ is the $M_k$*1 interference plus noise vector at the first telecommunication device $20_k$ and $H_{DL,k}$ is the $M_k$*N downlink MIMO channel matrix between the second telecommunication device 10 and first telecommunication

device $20_k$.

The MIMO channel matrix estimation module 350 estimates the matrix $H_{DL,k}$.

Each element *(m,n)* with *m*=1 to $M_k$ and *n*=1 to *N* of the matrix $H_{DL,k}$ represents the complex propagation gain from the *n*-th antenna of the second telecommunication device 10 and the *m*-th of the first telecommunication device $20_k$.

The MIMO channel matrix estimation module 350 estimates also the matrix $H_{UL,k}$ which is the $N*M_k$ uplink MIMO channel matrix between the first telecommunication device $20_k$ and the second telecommunication device 10.

Each element *(n,m)* with *m*=1 to $M_k$ and *n*=1 to *N* of the matrix $H_{UL,k}$ represents the complex propagation gain from the *m*-th antenna of the first telecommunication device $20_k$ and the *n*-th of the second telecommunication device 10.

Preferably the matrix $H_{UL,k}$ is equal to $H^T_{DL,k}$ where $[.]^T$ denotes the transpose of $[.]$ .

The channel interface 205 comprises a downlink linear transform module 310 which comprises means for executing a linear transformation of the signal vector $x_k(p)$ using a $m_0 * M_k$ matrix $V^T_{DL}$ .

Then, the linear transform yields the $m_0 * 1$ output vector :

$$x'(p) = V^T_{DL} x(p)$$

$$x'(p) = V^T_{DL} H_{DL,k} s(p) + z_k(p)' \text{ where } V^T_{DL} = \left[ v_{DL,1} ,..., v_{DL,m_0} \right] \text{ and } z_k(p)' = V^T_{DL} z_k(p) .$$

The downlink linear transform matrix $V^T_{DL}$ is defined, as it will be disclosed hereinafter, so that the first telecommunication device $20_k$ has good channel conditions at the output *x'(p).*

The downlink linear transform module 310 executes a linear transform on the signals received by the first telecommunication device. The downlink linear transform module 310 executes a linear transform on the $m_0$ pilot signals transferred by the first telecommunication device $20_k$ to the second telecommunication device 10 which comprise then a channel state information.

The channel interface 205 comprises a transmit power control module 325 which multiplies the pilot signals to be transferred by a power coefficient determined by the first telecommunication device $20_k$.

The transmit power control module 325 adjusts the power of the transferred signals representative of a group of data from a power information received from the second telecommunication device 10.

The channel interface 205 comprises an uplink linear transform module 305 which comprises means for executing a linear transformation of $m_0$ signals $r'(p)=[r'_1(p),..., r'_{m0}(p)]^T$ into the $M_k \times 1$ signal vector $r(p)$ using the $M_k \times m_0$ linear transformation matrix $V_{UL}$ as $r(p) = V_{UL} r(p)'$.

As it will be disclosed hereinafter, the uplink linear transform matrix $V_{UL}$ is defined so that good channel conditions are maintained between the first telecommunication device $20_k$ and the second telecommunication device 10.

The uplink linear transform module 305 executes a linear transform on the signals representative of groups of data transferred by the first telecommunication device. The uplink linear transform module 305 executes a linear transform on the $m_0$ pilot signals transferred by the first telecommunication device $20_k$ to the second telecommunication device 10 which comprise then a channel state information.

Preferably and in a non limitative way, the channel interface 205 comprises an uplink direction control module 325 which controls the spatial direction of the signals transferred to the second telecommunication device 10 by $M_k$ times duplicating the signals and weighting the duplicated signals by coefficients in order to perform beamforming, i.e. controls the spatial direction of the transmitted signals.

According to a variant of realisation of the present invention, the coefficients used for weighting the duplicated signals are transferred by the second telecommunication device 10.

**Fig. 4** is a diagram representing the architecture of the second telecommunication device according to the present invention.

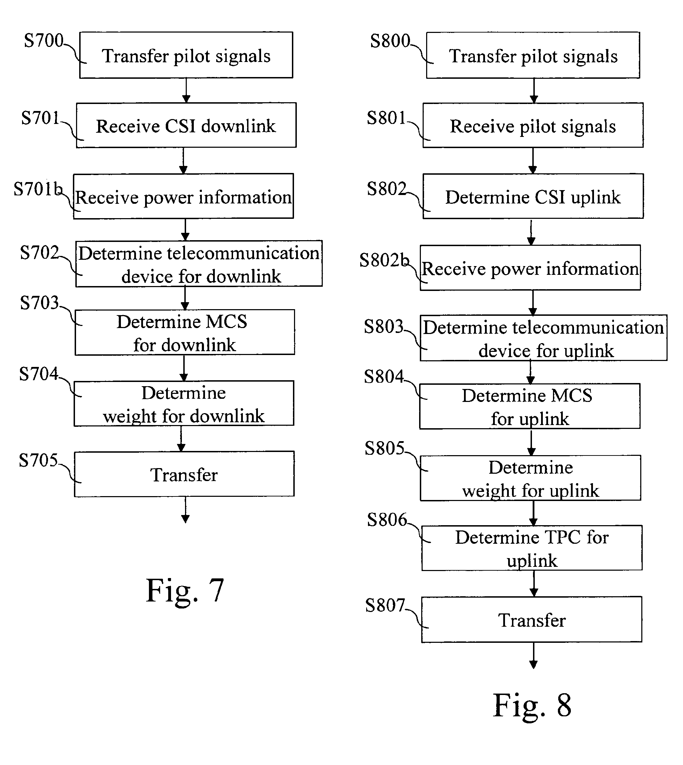

The second telecommunication device 10, has, for example, an architecture based on components connected together by a bus 401 and a processor 400 controlled by programs related to the algorithms as disclosed in the Figs. 7 and/or 8.

It has to be noted here that the second telecommunication device 10 is, in a variant, implemented under the form of one or several dedicated integrated circuits which execute the same operations as the one executed by the processor 400 as disclosed hereinafter.

The bus 401 links the processor 400 to a read only memory ROM 402, a random access memory RAM 403 and a channel interface 405.

The read only memory ROM 402 contains instructions of the programs related to the algorithms as disclosed in the Figs. 7 and/or 8 which are transferred, when the second telecommunication 10 is powered onto the random access memory RAM 403.

The RAM memory 403 contains registers intended to receive variables, and the instructions of the programs related to the algorithms as disclosed in the Figs. 7 and/or 8.

According to the present invention, the processor 400 is able to determine, for each first telecommunication device $20_l$ to $20_K$, from at least signals transferred by each first telecommunication device $20_l$ to $20_K$, the modulation and coding scheme to be used by each first telecommunication device $20_k$ for receiving groups of data. The processor 400 is able to determine to which first telecommunication device 20, signals representative of a group of data have to be sent according to signals transferred by the first telecommunication devices 20. The processor 400 determines for each first telecommunication device $20_l$ to $20_k$, from at least signals transferred by each first telecommunication device $20_k$, the modulation and coding scheme to be used by each first telecommunication device $20_k$ for transferring groups of data or pilot signals and/or determines which first telecommunication device 20 has to transfer signals representative of a group of data to the second telecommunication devices 10. In a variant, the processor 400 is also able to determine a power information which is representative of the transmission power to be used by each first telecommunication device $20_l$ to $20_k$ for transferring signals representative of a group of data from at least signals transferred by each first telecommunication device 20. In another variant, the processor 400 is also able to determine from an information representative of a power coefficient received from each first telecommunication device, the power coefficient used by each first telecommunication device $20_1$ to $20_K$ for multiplying the pilot signals transferred by each first telecommunication device $20_1$ to $20_K$.

From at least signals transferred by each first telecommunication device $20_1$ to $20_K$, the processor 400 is also able to determine weighting coefficients for controlling the spatial direction of the signals transferred to each first telecommunication device $20_1$ to $20_K$ in the downlink channel in order to perform beamforming.

From at least signals transferred by each first telecommunication device $20_1$ to $20_K$, the processor 400 is also able to determine weighting coefficients for controlling the spatial direction of the signals transferred by each first telecommunication device $20_1$ to $20_K$ in the uplink channel in order to perform beamforming.

Preferably and in a non limitative way, the channel interface 405 comprises a downlink direction control module, not shown in the Fig. 4, which controls the spatial direction of the signals transferred to each first telecommunication devices $20_l$ to $20_K$ by **N** times duplicating the signals and weighting the duplicated signals by coefficients in order to perform beamforming, i.e. controls the spatial direction of the transmitted signals.

**Fig. 5** is an algorithm executed by the first telecommunication device for the downlink channel according to the present invention.

The present algorithm is executed by each first telecommunication device $20_l$ to $20_K$, it will be disclosed when it is executed by the first telecommunication device $20_k$.

At step S500, the first telecommunication device 20k receives pilot signals $x_k(p) = H_{DL,k}s(p) + z_k(p)$ through the channel interface 205.

At next step S501, the MIMO channel matrix estimation module 350 estimates the matrix $H_{DL,k}$ from the received pilot signals.

At next step S502, the MIMO channel matrix estimation module 350 estimates the interference plus noise components received by the first telecommunication device $20_k$.

The MIMO channel matrix estimation module 350 forms an interference plus noise correlation matrix $\Phi = E_L z_k (p)z_k(p)^H$ by averaging $z_k(p)z_k(p)^H$ over a plurality of samples.

It has to be noted here that, in some variants or realisation of the present invention, the step S502 is not executed.

At next step S503, the processor 200 of the first telecommunication device $20_k$ performs a singular value decomposition of $H_{DL,k}^T = U\Lambda Q^H$ ,

where $U = [u_1,...u_N]$ is the $N*N$ unitary matrix, $Q =[q_1,...q_{Mk}]$ is the $M_k * M_k$ unitary matrix, $[\,]^H$ denotes the complex conjugate transpose and $\Lambda = diag [\lambda_1,\lambda_2,..., \lambda_d]$ with $\lambda_1 \geq ... \geq \lambda_d \geq 0$ is the $N* M_k$ diagonal matrix of real singular-values with $d = min\{M_k, N\}$.

In a variant of realisation, the processor 200 executes a singular value decomposition of the interference plus noise correlation matrix $\Phi = F\Lambda F^H$, determines a matrix $D = \Lambda^{-1/2}F^H$ and executes a singular value decomposition of

$(DH_{DL,k})^T = \hat{U}\hat{\Lambda}\hat{Q}^H$ instead of performing the singular value decomposition of $H_{DL,k}^T = U\Lambda Q^H$ .

$\hat{U}=[\hat{u}_1,...,\hat{u}_N]$ is the $N*N$ unitary matrix, $\hat{Q} =[\hat{q}_1,...,\hat{q}_{Mk}]$ is the $M_k * M_k$ unitary matrix, and $\hat{\Lambda} = [\hat{\lambda}_1,\hat{\lambda}_2,..., \hat{\lambda}_d]$ with $(\hat{\lambda}_1 \geq \hat{\lambda}_2 \geq \hat{\lambda}_d \geq 0)$ is the $N* M_k$ diagonal matrix of real singular-values with $d = min\{M_k,N\}$.

At next step S504, the processor 200 selects $m_0$ singular-values with $m_0 < M_k$. These $m_0$ singular-values are, as example, upper than a predetermined threshold or are the $m_0$ largest singular-values. As example, if the first telecommunication device 20k has three antennas, only the two largest singular-values are selected.

It has to be noted here that, the $m_0$ singular-values are selected from the downlink MIMO channel matrix $H_{DL,k}$ between the second telecommunication device 10 and the first telecommunication device $20_k$.

At next step S505 the processor 200 determines a downlink linear transform matrix $V_{DL}$.

The first telecommunication device $20_k$ determines $V_{DL}$ as $V_{DL} = [q_1,...,q_{m0}]$, where $[q_1,...,q_{m0}]$ are the selected vectors.

The virtual downlink MIMO channel $\widetilde{H}_{DL,k} = V_{DL}^T H_{DL,k}$ is then expressed as

$$\widetilde{H}_{DL,k} = V_{DL}^T H_{DL,k} = \left(H_{DL,k}^T V_{DL}\right)^T = \left[\lambda_1 u_1,...,\lambda_{m0} u_{m0}\right]^T.$$

$H_{DL,k}^T = U\Lambda Q^H$ can then be transformed into $H_{DL,k}^* H_{DL,k}^T = Q\Lambda^2 Q^H$ where [ ]* denotes the complex conjugate. Here we have :

$$H_{DL,k}^* H_{DL,k}^T Q = Q\Lambda^2$$

$$H_{DL,k}^* H_{DL,k}^T q_m = \lambda_m^2 q_m.$$

As $q_1,...q_{m0}$ are the selected eigenvectors of $H_{DL,k}^* H_{DL,k}^T$, $V_{DL}$ is given by:

$V_{DL} = \left[e_1\left\langle H_{DL,k}^* H_{DL,k}^T\right\rangle,...e_{m0}\left\langle H_{DL,k}^* H_{DL,k}^T\right\rangle\right]$, where $e_m\langle\cdot\rangle$ denotes the eigenvector of $\langle\cdot\rangle$ corresponding to the $m$-th largest eigenvalue of $\langle\cdot\rangle$.

According to a particular feature of the present invention, the first telecommunication device $20_k$ determines $V_{DL}$ considering also the interference plus noise components received by the first telecommunication device $20_k$. In such case, $V_{DL}$ is determined according to the following formula:

$$V_{DL} = \left[e_1\left\langle H_{DL,k}^* \Phi^{-1} H_{DL,k}^T\right\rangle,...e_{m0}\left\langle H_{DL,k}^* \Phi^{-1} \overline{H}_{DL,k}^T\right\rangle\right],$$

$$V_{DL} = \left[e_1\left\langle E_l\left[\overline{\overline{H}_{DL,k,l}^*} \overline{H}_{DL,k,l}^T\right]\right\rangle,...e_{m0}\left\langle E_l\left[H_{DL,k,l}^* H_{DL,k,l}^T\right]\right\rangle\right] \text{ with } l=1 \text{ to } L.$$

where $H_{DL,k,l}$ denotes the downlink MIMO channel matrix between the second telecommunication device 10 and the first telecommunication device $20_k$ in the $l$-th frequency subband and $E_l$ [.] denotes the average of the $L$ frequency subbands.

According to a particular feature of the present invention, when the present invention is used in a OFDMA system composed of $L$ frequency subbands, the first telecommunication device $20_k$ determines $V_{DL}$ considering also the interference plus noise components received by the first telecommunication device $20_k$. In such case, $V_{DL}$ is determined according to the following formula:

$$V_{DL} = \left[e_1\left\langle E_l\left[H_{DL,k,l}^* \overline{\Phi}_l^{-1} H_{DL,k,l}^T\right]\right\rangle,...e_{m0}\left\langle E_l\left[H_{DL,k,l}^* \Phi_l^{-1} H_{DL,k,l}^T\right]\right\rangle\right]$$

According to a particular feature of the present invention, when the present invention is used in a OFDMA system composed of L frequency subbands, the first telecommunication device $20_k$ determines $V_{DL}$ for each frequency subband or the first telecommunication device $20_k$ determines a unique matrix $V_{DL}$ for all the frequency subbands. In such case, $V_{DL}$ is given by:

where $\Phi_l$ denotes the interference plus noise correlation matrix in the $l$-th frequency subband determined by the first telecommunication device $20_k$.

According to the variant of realisation of the present invention, if the processor 200 executes a singular value decomposition of $\left(DH_{DL,k}\right)^T = \hat{U}\hat{\Lambda}\hat{Q}^H$ , the telecommunication device $20_k$ determines $V_{DL}$ as :

$$V_{DL} = \left[D^T q_1, ..., D^T q_{m0}\right].$$

Using $V_{DL}$, we have:

$$R = E\left[z_k^{'}(p)z_k^{'}(p)^H\right],$$

$$R = E\left[\left(V_{DL}^T z_k(p)\right)\left(V_{DL}^T z_k(p)\right)^H\right],$$

$$R = V_{DL}^T \Phi V_{DL}^{*},$$

$$R = \left[\bar{q}_1, ..., \bar{q}_{m0}\right]^T D\Phi D^H \left[\bar{q}_1^{*}, ..., \bar{q}_{m0}^{*}\right],$$

$$R = \left[\hat{q}_1, ..., \hat{q}_{m0}\right]^T \left[\hat{q}_1^{*}, ..., \hat{q}_{m0}^{*}\right] = I_{m0 \times m0}.$$

The $m_0 * N$ virtual downlink MIMO channel matrix $\tilde{H}_{DL,k}$ is then equal to:

$$\tilde{H}_{DL,k} = V_{DL}^T H_{DL,k} = \left[\hat{\lambda}_1 \hat{u}_1, ..., \hat{\lambda}_{m0} \hat{u}_{m0}\right]^T.$$

It has to be noted here that, the first telecommunication device $20_k$ whitens the interference plus noise components.

The first telecommunication device $20_k$ needs to report only the virtual downlink MIMO channel matrix $\tilde{H}_{DL,K}$.

The reporting of the interference correlation matrix $R = E\left[z_k^{'}(p)z_k^{'}(p)^H\right]$ , which can be obtained by averaging a plurality of samples, is no more required.

It has to be noted here that, if the telecommunication system uses Time Division Duplexing scheme, $H_{DL,k}^T = H_{UL,k}$ , the first telecommunication device $20_k$ sends $m_0$ pilot signals $r'(p)$.

As $x_{BS}(p) = H_{UL,k}V_{DL}r'(p) + z_{BS}(p)$, the second telecommunication device 10 can obtain $(H_{UL,k}V_{DL})^T = V_{DL}^T H_{UL,k}$ from $x_{BS}(p)$.

$H_{UL,k}$ is the $N*M_k$ uplink MIMO channel matrix between the first telecommunication device $20_k$ and the second telecommunication device 10.

Each element $(n,m)$ with $m$=1 to $M_k$ and $n$=1 to $N$ of the matrix $H_{UL,k}$ epresents the complex propagation gain from the $m$-th antenna of the first telecommunication device $20_k$ and the $n$-th of the second telecommunication device 10.

Preferably, the processor 200 moves from step S505 to step S505b. In a variant, the processor 200 moves from step S505 to step S506.

At step S505b, the processor 200 determines a power coefficient which multiplies the pilot signals to be transferred on the uplink channel. The power coefficient is dependant from the downlink channel matrix $H_{DL,k}$.

At next step S506, the processor 200 transfers the determined matrix $V_{DL}$ to the downlink linear transform module 310 which uses the determined matrix $V_{DL}$ for executing a linear transformation of the signal vector $x_k(p)$ using a $m_0 * M_k$ matrix $V_{DL}^T$ .

According to the preferred mode of realisation, the processor 200 transfers, at the same step, the power coefficient determined at step S505b to the transmit power control module 325 of the channel interface 205.

At next step S507, the processor 200 determines the channel state information on the downlink channel considering $x'(p)$.

According to a particular feature of the present invention, the channel state information is the $m_0 * N$ virtual downlink MIMO channel matrix $\widetilde{H}_{DL,k}$.

According to a particular feature of the present invention, the channel state information are the $m_0 * N$ virtual downlink MIMO channel matrix $\widetilde{H}_{DL,k}$ and the interference correlation matrix $R = E_L z_k(p)'z_k(p)'^H$ determined at the output $x'(p)$. The matrix $\widetilde{H}_{DL,k}$ is preferably determined using downlink pilot signals which are transferred by the second telecommunication device 10. The interference correlation matrix is determined by averaging $z_k(p)'z_k(p)'$ over a plurality of samples.

According to another particular feature of the present invention, the channel state information are the $m_0 * N$ virtual downlink MIMO channel matrix $\widetilde{H}_{DL,k}$ and an approximated interference plus noise power per antenna $P'_z$ determined at the output $x'(p)$. The interference plus noise power per antenna $P'_z$ is determined by averaging $Z_k(p)'^H Z_k(p)'$ over a plurality of samples.

According to another particular feature of the present invention, the channel state information are the $m_0 * N$ matrix $R^{-1/2}\widetilde{H}_{DL,k}$. The matrix $R^{-1/2}\widetilde{H}_{DL,k}$ expresses the channel conditions after an interference whitening process executed by the first telecommunication device $20_k$.

According to another particular feature of the present invention, the channel state information are the $m_0 * N$ matrix $P_z'^{-1/2}\widetilde{H}_{DL,k}$. The matrix $P_z'^{-1/2} \widetilde{H}_{DL,k}$ expresses an approximation of the channel conditions after a conversion of the interference plus noise power into unit power at the output $x'(p)$.

According to another particular feature of the present invention, and preferably when the telecommunication system uses Time Division Duplexing scheme, the channel state information is representative of the virtual downlink MIMO channel matrix $\widetilde{H}_{DL,k}$ and the interference correlation matrix $R$.

At next step S508, the processor 200 commands the transfer, to the second telecommunication device 10, of the determined channel state information through the uplink channel.

Preferably, the channel state information is reported by transferring $m_0$ pilot signals which are multiplied by the downlink linear transform matrix $V_{DL}$. As the signals transferred by the first telecommunication device are also multiplied by the propagation gains between the antennas of the telecommunication devices, the channel responses at the second telecommunication device 10 is given by $H_{UL,k}V_{DL} = (V_{DL}^T H_{UL,k})^T$.

Therefore, the second telecommunication device 10 obtains the knowledge of the virtual downlink MIMO channel $\widetilde{H}_{DL,k} = V_{DL}^T H_{DL,k}$ from the $m_0$ received pilot signals.

It has to be noted here that, the channel state information can also be reported under the form of information bits.

Preferably, the processor 200 moves from step S508 to step S508b. In a variant, the processor 200 moves from step S508 to step S509.

At step S508b, the processor 200 commands the transfer of the information representative of the coefficient determined at step S505b to the second telecommunication device 10.

If the second telecommunication device 10 knows the power coefficient which multiplies the pilot signals, the second telecommunication device 10 can estimate $\widetilde{H}_{DL,k}$.

However, if the second telecommunication device 10 is not aware of the power coefficient which multiplies the pilot signals, the second telecommunication device 10 can't estimate $\widetilde{H}_{DL,k}$ as far as the power of the pilot signals is undefined.

Therefore, if the power of the pilot signals transferred by the first telecommunication device $20_k$ is not predetermined, the first telecommunication device $20_k$ has to send the information representative of the power coefficient to the second telecommunication device 10.

At next step S509, the processor 200 detects the reception through the channel interface 205, of information representative of the modulation and coding scheme determined by the second telecommunication device 10. Such information indicates the modulation and the coding scheme the first telecommunication device $20_k$ has to use when it receives groups of data through the downlink channel.

At next step S510, the processor 200 transfers the parameters related to the modulation and coding scheme to the channel interface 205 which uses the parameters for receiving groups of information.

The processor 200 returns then to step S500.

**Fig. 6** is an algorithm executed by the first telecommunication device for the uplink channel according to the present invention.

The present algorithm is executed by each first telecommunication device $20_1$ to $20_K$, it will be disclosed when it is executed by the first telecommunication device $20_k$.

At step S600, the first telecommunication device 20k receives signals $x_k(p) = H_{DL,k}s(p) + z_k(p)$ through the channel interface 205. These signals are the same as the one received at step S500 of the Fig. 5.

At next step S601, the MIMO channel matrix estimation module 350 estimates the uplink channel matrix $H_{UL,K}$.

In TDD scheme, $H_{UL,k} = H^T_{DL,k}$ as the channel responses between the uplink and downlink channels of the telecommunication network 15 are reciprocal.

In FDD scheme, the channel responses between the uplink and downlink channels of the telecommunication network 15 are not perfectly reciprocal. However, since the uplink and the downlink channels have similar characteristics, especially for channels having a large gain, $H_{UL,k} = H^T_{DL,k}$ can be considered also.

At next step S602, the MIMO channel matrix estimation module 350 determines the interference plus noise components received by the first telecommunication device $20_k$.

The MIMO channel matrix estimation module 350 forms a the interference plus noise correlation matrix $\Phi = E_L[z_k(p)z_k(p)^H]$ by averaging $z_k(p)z_k(p)^H$ over a plurality of samples.

It has to be noted here that, in some variants or realisation of the present invention, the step S602 is not executed.

At next step S603, the processor 200 of the first telecommunication device $20_k$ performs a singular value decomposition of $H_{UL,k} = U_U \Lambda_U Q_U^H$ where $U_u = [u_{U1},... u_{UN}]$ is the $N*N$ unitary matrix, $Q_U = [q_{U1},... q_{UMk}]$ is the $M_k * M_k$ unitary matrix and $\Lambda_U = diag[\lambda_{U1}, \lambda_{U2},...,\lambda_{Ud}]$ with $\lambda_{U1} \geq ... \geq \lambda_{Ud} \geq 0$ is the $N*M_k$ diagonal matrix of real singular-values with $d = min\{M_k, N\}$.

At next step S604, the processor 200 selects $m_0$ singular-values. These $m_0$ singular-values are as example upper than a predetermined threshold or are the $m_0$ largest singular-values.

It has to be noted that the number $m_0$ of singular-values selected for the uplink channel can be equal or different to the number $m_0$ of singular-values selected for the downlink channel.

It has to be noted also that, the $m_0$ singular-values are selected from the uplink MIMO channel matrix $H_{UL,k}$ between the first telecommunication device $20_k$ and the second telecommunication device 10.

At next step S605 the processor 200 determines a linear transform matrix $V_{UL}$.

The first telecommunication device $20_k$ determines $V_{UL}$ as $V_{UL}=[q_{U1},..., q_{Um0}]$.

The virtual uplink MIMO channel $\tilde{H}_{UL,k} = H_{UL,k}V_{UL}$ is then expressed as

$$\tilde{H}_{UL,k} = H_{UL,k}V_{UL} = [\lambda_{U1}u_{U1},...,\lambda_{Um0}u_{Um0}]^T .$$

On the same way as the one disclosed for $V_{DL}$, $V_{UL}$ is given by:

$$V_{UL} = [e_1\langle H^H_{UL,k}H_{UL,k}\rangle,...e_{m0}\langle H^H_{UL,k}H_{UL,k}\rangle],$$ where $e_m\langle\cdot\rangle$ denotes the eigenvector of $\langle\cdot\rangle$ corresponding to the $m$-th largest eigenvalue of $\langle\cdot\rangle$.

According to a particular feature of the present invention, the first telecommunication device $20_k$ determines $V_{UL}$ considering also the interference plus noise components received by the first telecommunication device $20_k$. In such case, $V_{UL}$ is determined according to the following formula:

$$V_{UL} = [e_1\langle H^H_{UL,k}\Phi^{-1}H_{UL,k}\rangle,...e_{m0}\langle H^H_{UL,k}\Phi^{-1}H_{UL,k}\rangle],$$

where $\Phi = E_L[z_k(p)z_k(p)^H]$ denotes the interference plus noise correlation matrix given by averaging $z_k(p)z_k(p)^H$ over a plurality of samples.

According to a particular feature of the present invention, when the present invention is used in a OFDMA system composed of $L$ frequency subbands, the first telecommunication device $20_k$ determines $V_{UL}$ for each frequency subband or the first telecommunication device $20_k$ determines a unique $V_{UL}$ for all the frequency subbands. In such case, $V_{UL}$ is given by:

$$V_{UL} = [e_1\langle E_l[H^H_{UL,k,l}H_{UL,k,l}]\rangle,...e_{m0}\langle E_l[H^H_{UL,k,l}H_{UL,k,l}]\rangle] \text{ with } l=1 \text{ to } L.$$

$H_{UL,k,l}$ is the uplink MIMO channel matrix between the second telecommunication device 10 and the first telecommunication device $20_k$ in the *l*-th frequency subband and $E_l[.]$ denotes the average of the *L* frequency subbands.

According to a particular feature of the present invention, when the present invention is used in a OFDMA system composed of *L* frequency subbands, the first telecommunication device $20_k$ determines $V_{UL}$ considering also the interference plus noise components received by the first telecommunication device $20_k$. In such case, $V_{UL}$ is determined according to the following formula:

$$ V_{UL} = \left[ e_1 \left\langle E_l \left[ H_{UL,k,l}^H \Phi_l^{-1} H_{UL,k,l} \right] \right\rangle, ... e_{m0} \left\langle E_l \left[ H_{UL,k,l}^H \Phi_l^{-1} H_{UL,k,l} \right] \right\rangle \right], $$

where $\Phi_l$ denotes the interference plus noise correlation matrix in the *l*-th frequency subband determined by the first telecommunication device $20_k$.

According to a particular feature of the present invention, the uplink linear transform matrix $V_{UL}$ is determined as $V_{UL} = V_{DL}$. Specifically, in TDD system with $V_{UL} = V_{DL}$, the first telecommunication device $20_k$ needs only to report $m_0$ weighted pilot signals which are use by the second telecommunication device 10 in order to determine the channel quality indication for the uplink and downlink channels.

Preferably, the processor 200 moves from step S605 to step S605b. In a variant, the processor 200 moves from step S605 to step S606.

At step S605b, the processor 200 determines a power coefficient which multiplies the pilot signals to be transferred on the uplink channel. The power coefficient is dependant from the uplink channel matrix $H_{UL,k}$.

At next step S606, the processor 200 transfers the determined matrix $V_{UL}$ to the uplink linear transform module 305 which uses the determined matrix $V_{UL}$ for executing a linear transformation of the $m_0$ signals $r'(p) = [r'_1 (p),..., r'_{m0} (p)]^T$ into the signal vector $r(p)$ using the linear transformation matrix $V_{UL}$ as $r(p) = V_{UL}r(p)'$.

According to the preferred mode of realisation, the processor 200 transfers, at the same step, the power coefficient determined at step S605b to the transmit power control module 325 of the channel interface 205.

At next step S607, the processor 200 commands the transfer of $m_0$ pilot signals composed of $p_0$ symbols $r'(1),...r'(p_0)$ to the second telecommunication device 10 through the channel interface 205.

Preferably, the processor 200 moves from step S607 to step S607b. In a variant, the processor 200 moves from step S607 to step S608.

At step S607b, the processor 200 commands the transfer of an information representative of the power coefficient determined at step S605b to the second telecommunication device 10.

At next step S608, the processor 200 detects, through the channel interface 205, the reception of a group of data which comprises the modulation and coding scheme which has to be used for transferring groups of data through the uplink channel.

In a variant, the processor 200 detects also, the reception of a group of data which comprises a request of an update of the transmit power of the signals representative of a group or groups of data it transfers through the uplink channel.

The request of an update of the transmit power comprises an information representative of an increase or a decrease command of the transmit power of signals representative of a group of data.

In another variant of realisation of the present invention, the coefficients used for weighting the signals transferred in the uplink channel in order to perform beamforming are also received from the second telecommunication device 10 at step S608.

At next step S609, the processor 200 commands the transfer of the received modulation and coding scheme and the received coefficients which have to be used by the channel interface 205 for transferring groups of data through the uplink channel.

If there is a request of an update of the transmit power, the processor 200 adjusts the transmit power coefficient. If the information is representative of an increase, the processor 200 increases the transmit power coefficient by one decibel, if the information is representative of a decrease, the processor 200 decreases the transmit power coefficient by one decibel and transfers the adjusted transmit power coefficient to the transmit power control module 325 of the channel interface 205.

According to the transmit power coefficient and the coefficients used for weighting the signals transferred in the uplink channel in order to perform beamforming, the first telecommunication device $20_k$ replaces $r'(p)$ by $r'(p) = Tur'' (p)$ in case of a signal group of data or packet transmission,

where T is the transmit power coefficient determined at step S605b or received at step S608, u is the $m_0 * 1$ vector formed by the coefficients used for weighting the signals transferred in the uplink channel in order to perform beamforming and $r''(p)$ is the group of data to be transferred.

If F groups of data have to be transferred, the first telecommunication device $20_k$ replaces *r'(p)* by

$$r'(p) = \sum_{f=1}^{F} T_f u_f r_f''(p)$$ where $T_f u_f r_f''(p) = Tur''(p)$ for the *f*-th group of data.

The virtual control of the transmission is then performed on the virtual uplink MIMO channel.

The processor 200 returns then to step S600.

**Fig. 7** is an algorithm executed by the second telecommunication device for determining, from channel state information on downlink channels, the first telecommunication device which has to transfer at least one group of data and/or how to transfer at least one group of data on the downlink channel, according to the present invention.

At step S700, the processor 400 of the second telecommunication device 10 commands the transfer of pilot signals to at least one first telecommunication device $20_k$, with $k=1$ to $K$. These pilot signals are as the one received by the first telecommunication device $20_k$ at step S500.

At next step S701, the processor 400 detects the reception of the channel state information transferred by at least a part of the first telecommunication devices 20 at step S508 of the algorithm of the Fig. 5.

The channel state information is preferably received under the form of pilot signals.

Preferably, the processor 400 moves from step S701 to step S701b. In a variant, the processor 400 moves from step S701 to step S702.

At next step S701b, the processor 400 detects the reception of an information representative of a power coefficient used by the first telecommunication device $20_k$ for weighting pilot signals received at step S701.

At next step S702, the processor 400 determines to which first telecommunication device $20_k$, with $k=1$ to $K$, group of data has to be transferred according to the channel state information received from at least the part of the first telecommunication devices 20 and to the power information if there are.

Preferably, at next step S703, the processor 400 determines the modulation and coding scheme, the power of transferred signal to the first telecommunication device $20_k$ assuming that the first telecommunication device $20_k$ has virtually $m_0$ antennas and considering the virtual downlink MIMO channel $\widetilde{H}_{DL,k} = V_{DL}^T H_{DL,k}$.

As it has been already described, each first telecommunication devices $20_k$, with $k=1$ to $K$, considers a virtual downlink channel matrix $\widetilde{H}_{DL,k} = V_{DL}^T H_{DL,k}$ and reports to the second telecommunication device 10, channel state information through the uplink channel.

The second telecommunication device 10 receives the channel state information transferred by each first telecommunication $20_1$ to $20_K$ and determines for each first telecommunication device $20_1$ to $20_K$, information like the modulation and coding scheme to be used by the first telecommunication devices 20 and by the second telecommunication device 10 for the downlink channel. The second telecommunication device 10 determines, from the channel state information, the coefficients to be used for weighting the signals transferred in the downlink channel in order to perform beamforming.

According to a particular feature of the present invention, the second telecommunication device 10 determines these information considering the $m_0 *N$ virtual downlink MIMO channel matrix $\widetilde{H}_{DL,k}$ and the interference correlation matrix $R = E_L z_k (p)' Z_k (p)^{'H} \rfloor$.

According to another particular feature of the present invention, the second telecommunication device 10 determines these information considering the $m_0 * N$ virtual downlink MIMO channel matrix $\widetilde{H}_{DL,k}$ and the an approximated interference plus noise power per antenna $P'_z$.

According to another particular feature of the present invention, the second telecommunication device 10 determines these information considering the matrix $R^{-1/2}\widetilde{H}_{DL,k}$ which expresses the channel conditions after an interference whitening process.

According to another particular feature of the present invention, the second telecommunication device 10 determines these information considering the $m_0 * N$ matrix $P_z'^{-1/2}\widetilde{H}_{DL,k}$ which expresses an approximation of the channel conditions after a conversion of the interference plus noise power into unit power at the output *x'(p).*

According to another particular feature of the present invention, and preferably when the telecommunication system uses Time Division Duplexing scheme, the second telecommunication device 10 determines these information using the channel response of the $m_0$ pilot signals received on the uplink channel. The channel response of the $m_0$ pilot signals are representative of the virtual downlink MIMO channel matrix $\widetilde{H}_{DL,k}$ and the interference correlation matrix *R*.

At next step S704, the processor 400 determines the coefficients to be used by the second telecommunication device for weighting the transferred signals in order to perform beamforming on the transferred signals and the transmission power to be used for transferring at least a group of data to the first telecommunication device.

At next step S705, the processor 400 commands the transfer of the determined modulation, coding scheme and the determined coefficients to the channel interface 405. The channel interface 405 uses the determined modulation and coding scheme, and the determined coefficients for the transfer of group of data through the downlink channel. The channel interface 405 transfers also the modulation, coding scheme to the concerned first telecommunication device $20_k$.

In a variant of realisation, the command which is representative of an increase or a decrease of the transmit power of the first telecommunication device $20_k$ is also transferred at the same step.

The processor 400 returns then to step S700.

**Fig. 8** is an algorithm executed by the second telecommunication device for determining, from channel state information on uplink channels, the first telecommunication device which has to transfer at least one group of data and how to transfer the at least one group of data on the uplink channel according to the present invention.

At step S800, the processor 400 of the second telecommunication device 10 commands the transfer of pilot signals to at least a part of the first telecommunication device $20_k$, with $k=1$ to $K$. These pilot signals are as the one received by the first telecommunication device $20_k$ at step S600.

If each first telecommunication device $20_l$ to $20_K$ transmits the $p$-th symbol under the form of $M_k$ simultaneous signals $r_1(p),...,r_{M_k}(p)$ through its $M_k$ antennas MSAnt1 to MSAntK to the second telecommunication device 10 on the uplink channel, the second telecommunication device 10 receives a $N*1$ vector $\boldsymbol{x_{BS}(p)}$ which is equal to $\boldsymbol{x_{BS}(p)} = H_{UL,k}\boldsymbol{r}(p)+\boldsymbol{z_{BS}(p)}$ where $\boldsymbol{r}(p)=[r_1(p),...,r_{Mk}(p)]^T$ and $\boldsymbol{z_{BS}(p)}$ is the $N*1$ interference plus noise vector at the second telecommunication device 10.

According to the invention, the first telecommunication device $20_k$ performs a linear transformation of $\boldsymbol{m_0}$ pilot signals $\boldsymbol{r'(p)} = [r'_1(p),...,r'_{m0}(p)]^T$ into the signal vector $\boldsymbol{r}(p)$ using the linear transformation matrix $V_{UL}$ as $\boldsymbol{r}(p) = V_{UL}\boldsymbol{r}(p)'$.

The signal vector received by the second telecommunication device 20 is represented by $\boldsymbol{x_{BS}(p)} = H_{UL,k}V_{UL}\boldsymbol{r}(p)'+\boldsymbol{z_{BS}}(p)$.

At next step S801, the processor 400 detects the reception of the $\boldsymbol{m_0}$ pilot signals composed of $\boldsymbol{p_0}$ symbols $\boldsymbol{r'}(1), .... \boldsymbol{r'(p_0)}$ transferred by at least a part of the first telecommunication devices 20 at step S607 of the algorithm of the Fig. 6.

At next step S802, the processor 400 determines the channel state information from the received pilot signals.

The received signals at the second telecommunication device 10 are expressed as

$$\left[x_{BS}(1),...,x_{BS}(p_0)\right] = H_{UL,k}V_{UL}\left[r(1)',...,r(p_0)'\right] + \left[z_{BS}(1),...,z_{BS}(p_0)\right].$$

In a matrix form, we have:

$$X = \left[x_{BS}(1),...,x_{BS}(p_0)\right]$$

$$R' = \left[r'(1),...,r'(p_0)\right]$$

$$Z_{BS} = \left[z_{BS}(1),...,z_{BS}(p_0)\right]$$

So,

$$X = H_{UL,k}V_{UL}R'+Z_{BS}.$$

As the pilot signals are orthogonal, $\boldsymbol{R'R'^H} = \boldsymbol{p_0I}$, the processor 400 estimates $\boldsymbol{H_{UL,k}V_{UL}}$ as

$$\frac{1}{p_0}XR'^H = H_{UL,k}V_{UL} + \frac{1}{p_0}Z_{BS}R'^H.$$

Using the virtual uplink channel matrix $\boldsymbol{H_{UL,K}V_{UL}}$, the processor 400 determines the channel state information on the uplink channel.

Preferably, the processor 400 moves from step S802 to step S802b. In a variant, the processor 400 moves from step S802 to step S803.

At step S802b, the processor 400 detects the reception of an information representative of a power coefficient used by the first telecommunication device $20_k$ for multiplying the pilot signals received at step S801.

At next step S803, the processor 400 determines which first telecommunication device $20_k$, with $k=1$ to $K$, has to transfer a group of data to the second telecommunication device 10 according to the channel state information received from at least a part of the first telecommunication devices 20.

At next step S804, the processor 400 determines the modulation and coding scheme to be used by the determined first telecommunication device $20_k$ for transferring a group of data to the second telecommunication device 10 assuming that the first telecommunication device $20_k$ has virtually $m_0$ antennas and considering the virtual uplink MIMO channel $H_{UL,k} = H_{UL,k}V_{UL}$.

At next step S805, the processor 400, using the matrix $H_{UL,k}V_{UL}$, determines the transmission control, i.e. the weighting coefficients to be used by the first telecommunication device in order to perform beamforming for the uplink channel.

In a variant of realisation, the channel interface 405 measures the interference correlation matrix $R_{BS} = \left[ z_{BS}(p)z_{BS}^{H}(p) \right]$ which is obtained by averaging a plurality of samples. Using the matrices $H_{UL,k}V_{UL}$ and $R_{BS}$, the processor 400 determines the transmission control, i.e. the weighting coefficients to be used by the first telecommunication device in order to perform beamforming for the uplink channel.

Preferably, the processor 400 moves from step S805 to S807.

In a variant, the processor 400 moves from step S805 to S806.

At step S806, the processor 400 determines the power of the signals that the first telecommunication device $20_k$ has to use when it transfers signals representative of groups of data to the second telecommunication device 10 through the uplink channel.

As example and in a non limitative way, the channel interface 405 measures the power level of $m_0$ received pilot signals from the first telecommunication device $20_k$ and transfers it to the processor 400.

The processor 400 checks if the measured power level is upper or lower than a predetermined range of power. If the measured power is lower than a predetermined range of power the processor 400 forms a command which is representative of an increase, as example of one decibel, of the transmit power of the first telecommunication device $20_k$. If the information is representative of an decrease, the processor 400 forms a command which is representative of a decrease, as example of one decibel, of the transmit power of the first telecommunication device $20_k$.

At next step S807, the processor 400 commands the transfer to the determined first telecommunication device $20_k$ of the determined modulation and coding scheme to the channel interface 405 and/or the determined transmit power at step S806 and/or the weighting coefficients to be used by the first telecommunication device in order to perform beamforming for the uplink channel.

The channel interface 405 uses the determined modulation and coding scheme for the reception of group of data through the uplink channel and. The channel interface 405 transfers the modulation and coding scheme to the concerned first telecommunication device $20_k$ and/or, if needed, of the command which is representative of an increase or a decrease of the transmit power of the first telecommunication device $20_k$ and/or of the weighting coefficients to be used by the first telecommunication device in order to perform beamforming for the uplink channel.

The processor 400 returns then to step S800.

It has to be noted here that, the present invention has been disclosed when a singular value decomposition is used for the selection of the subset of propagation gains between the antennas of the first and second telecommunication devices.

Many other techniques can be used also in the present invention.

As example, the first telecommunication device $20_k$ determines the propagation gains between the antennas of the first and second telecommunication devices as it has already been described.

The first telecommunication device $20_k$ forms a downlink channel matrix $H_{DL,k} = \begin{bmatrix} h_1 \\ \cdot \\ \cdot \\ \cdot \\ h_{Mk} \end{bmatrix}$, where $h_m$ with $m=1$ to $M_k$ is a $1 *N$ vector.

The first telecommunication device $20_k$ forms, for each of the first telecommunication device's antenna, a group propagation gains and determines among the groups, the ones which have the highest norm.

The first telecommunication device selects among the determined propagation gains the group or groups which has or have the highest norm, as the subset of the determined propagation gains.

The first telecommunication device $20_k$ selects $m_0$ antennas among its $M_k$ antennas which have the $m_0$ largest values $\|h_m\|$ among $\|h_1\|,...,\|h_{Mk}\|$.

For instance, the first telecommunication device $20_k$ has 4 antennas, $m_0 = 2$ and $\|h_1\|$ and $\|h_3\|$ are higher than $\|h_2\|$ and $\|h_4\|$.

The downlink linear transform matrix $V_{DL}$ is then equal to:

$$V_{DL} = \begin{bmatrix} 1 & 0 \\ 0 & 0 \\ 0 & 1 \\ 0 & 0 \end{bmatrix}.$$

Then, $V_{DL}^T H_{DL,k} = \begin{bmatrix} h_1 \\ h_3 \end{bmatrix}$.

Thus the virtual MIMO downlink channel comprises only the highest propagation gains $\|h_1\|$ and $\|h_3\|$.

Naturally, many modifications can be made to the embodiments of the invention described above without departing from the scope of the present invention.

## Claims

1. Method for reporting, through a wireless network, a channel state information between a first telecommunication device which comprises $M_k$ antennas and a second telecommunication device which comprises antennas, **characterised in that** the method comprises the steps executed by the first telecommunication device of:

   - determining the propagation gains between the antennas of the first and second telecommunication devices,
   - determining, from the propagation gains, a linear transform of a dimension of $m_0 * M_k$ with $m_0 < M_k$,
   - transferring information representative of the linear transform to the second telecommunication device.

2. Method according to claim 1, **characterised in that** the information representative of the linear transform is transferred by transferring $m_0$ pilot signals to the second telecommunication device, the pilot signals being multiplied by the linear transform.

3. Method according to claim 2, **characterised in that** $m_0$ is strictly upper than one.

4. Method according to claim 3, **characterised in that** the channel state information is representative of the downlink channel and the linear transform which weights the signals representative of a group of data received by the first telecommunication device.

5. Method according to claim 4, **characterised in that** the determined propagation gains between the antennas of the first and second telecommunication devices are under the form of a downlink channel matrix.

6. Method according to claim 5, **characterised in that** the linear transform is a downlink linear transform determined by :

   - executing a singular value decomposition of the downlink channel matrix,
   - selecting a part of eigenvectors obtained from the singular value decomposition.

7. Method according to claim 6, **characterised in that** the downlink linear transform is equal to :

$$V_{DL} = \left[ e_1 \left\langle H_{DL,k}^* H_{DL,k}^T \right\rangle, \dots e_{m0} \left\langle H_{DL,k}^* H_{DL,k}^T \right\rangle \right],$$ where $e_m \langle . \rangle$, with $m=1$ to $m_0$, denotes the eigenvector of $\langle . \rangle$ corresponding to the selected eigenvalues of $\langle . \rangle$, $H_{DL,k}$ is the downlink channel matrix, $H_{DL,k}^*$ is the conjugate of $H_{DL,k}$ and $H_{DL,k}^T$ is the transpose of $H_{DL,k}$.

8. Method according to claim 6, **characterised in that** the method comprises further step of determining an interference plus noise correlation matrix and **in that** the downlink linear transform is equal to :

$$V_{DL} = \left[ e_1 \left\langle H^*_{DL,k} \Phi^{-1} H^T_{DL,k} \right\rangle, \ldots e_{m0} \left\langle H^*_{DL,k} \Phi^{-1} H^T_{DL,k} \right\rangle \right],$$ where $e_m\langle . \rangle$, with $m$=1 to $m_0$, denotes the eigen-vector of $\langle . \rangle$ corresponding to the selected eigenvalues of $\langle . \rangle$, $\Phi^{-1}$ is the inverse of the interference plus noise correlation matrix, $H_{DL,k}$ is the downlink channel matrix, $H^*_{DL,k}$ is the conjugate of $H_{DL,k}$ and $H^T_{DL,k}$ is the transpose of $H_{DL,k}$.

9. Method according to claim 6, **characterised in that** the wireless network comprises a plurality of frequency subbands and **in that** a downlink linear transform is determined for each frequency subband and $m_0$ pilot signals are transferred for each frequency subband.

10. Method according to claim 6, **characterised in that** the wireless network comprises a plurality of frequency subbands and **in that** the downlink linear transform is determined for the frequency subbands.

11. Method according to any of the claims 6 to 10, **characterised in** the method comprises further steps of:

- determining a power coefficient from the propagation gains,
- multiplying the $m_0$ pilot signals by the power coefficient,
- transferring an information representative of the power coefficient to the second telecommunication device.

12. Method according to claim 5, **characterised in that** the method comprises further step of determining an interference plus noise correlation matrix and **in that** the downlink linear transform is determined by :

- executing a singular value decomposition of the interference plus noise correlation matrix $\Phi = F\Lambda F^H$,
- determining a matrix $D = \Lambda^{-1/2} F^H$,
- executing a singular value decomposition of $(DH_{DL,k})^T = \hat{U}\hat{\Lambda}\hat{Q}^H$,

- selecting a part of singular-values obtained from the singular value decomposition of $$\left( DH_{DL,k} \right)^T = \hat{U}\hat{\Lambda}\hat{Q}^H,$$ where $\hat{Q} = [q_1, \ldots, q_{Mk}]$ and $M_k$ is the number of antennas of the first telecommunication device,
- selecting the vectors corresponding to the selected singular-values.

13. Method according to claim 12, **characterised in that** the downlink linear transform is equal to :
$V_{DL} = {}_{\llcorner} D^T q_1, \ldots, D^T q_{m0} {}_{\lrcorner}$, where $q_1, \ldots, q_{m0}$ are the selected eigenvectors.

14. Method according to any of the claims 5 to 13, **characterised in that** the method comprises further step of :

- determining, from the propagation gains, an uplink linear transform of a dimension of $m_0 * M_k$ with $m_0 < M_k$.

15. Method according to claim 14, **characterised in that** the uplink linear transform is equal to the downlink linear transform.

16. Method according to claim 14, **characterised in that** the method comprises further step of :

- transferring $m_0$ pilot signals to the second telecommunication device, the pilot signals being multiplied by the uplink linear transform.

17. Method according to claim 1 or 2, **characterised in that** the linear transform is an uplink linear transform which weights the signals representative of a group of data transferred by the first telecommunication device to the second telecommunication device and the determined propagation gains between the antennas of the first and second telecommunication devices are under the form of an uplink channel matrix.

18. Method according to claim 17, **characterised in that** the uplink linear transform is determined by :

- executing a singular value decomposition of the uplink channel matrix,
- selecting a part of vectors obtained from the singular value decomposition.

**19.** Method according to any of the claim 17 or 18, **characterised in** the method comprises further steps of :

- determining a power coefficient from the propagation gains,
- multiplying the $m_0$ pilot signals by the power coefficient,
- transferring an information representative of the power coefficient to the second telecommunication device.

**20.** Method according to any of the claims 1 to 19, **characterised in that** the method comprises the steps executed by the second telecommunication device of :

- obtaining from the received pilot signals a channel state information,
- controlling the transfer of the signals representative of the group of data between the first and the second telecommunication devices according to the channel state information.

**21.** Method according to claim 20, **characterised in that** the control of the transfer of the signals between the first and the second telecommunication devices is the control of signals representative of the group of data transferred to the first telecommunication device.

**22.** Method according to claim 21, **characterised in that** the channel state information is received from the first telecommunication device.

**23.** Method according to the claim 22, **characterised in that** the control of the transfer of signals representative of a group of data to the first telecommunication device is the determination of the modulation and coding scheme to be used for transferring at least signals representative of a group of data to the first telecommunication device.

**24.** Method according to the claim 22 or 23, **characterised in that** the second telecommunication device receives channel state information from plural first telecommunication devices and **in that** the control of the transfer of signals representative of a group of data to the first telecommunication device is the determination to which first telecommunication device or devices among the plural first telecommunication devices, signals representing at least a group of data have to be transferred.

**25.** Method according to claim 24, **characterised in that** the control of the transfer of the signals between the first and the second telecommunication devices is the control of signals representative of the group of data transferred by the first telecommunication device.

**26.** Method according to claim 25, **characterised in that** the control of the transfer of signals representative of a group of data to the first telecommunication device is the determination of the transmission power to be used for transferring signals representative of a group of data by the first telecommunication device and/or information enabling the first telecommunication device to weight the signals transferred on the uplink channel.

**27.** Method according to the claim 25 or 26, **characterised in that** the control of the transfer of signals representative of a group of data by the first telecommunication device is the determination of the modulation and coding scheme to be used for transferring at least signals representative of a group of data.

**28.** Method according to any of the claims 25 to 27, **characterised in that** the second telecommunication device receives channel state information from plural first telecommunication devices and **in that** the control of the transfer of signals representative of a group of data is the determination of the first telecommunication device among the plural first telecommunication devices, which has to transfer signals representing at least a group of data.

**29.** Device for reporting, through a wireless network, a channel state information between a first telecommunication device which comprises $M_k$ antennas and a second telecommunication device which comprises antennas, **characterised in that** device for reporting is included in the first telecommunication device and comprises:

- means for determining the propagation gains between the antennas of the first and second telecommunication devices,
- means for determining, from the propagation gains, a linear transform of a dimension of $m_0 * M_k$ with $m_0 < M_k$,

- means for transferring $m_0$ pilot signals to the second telecommunication device, the pilot signals being multiplied by the linear transform.

30. System for controlling the transfer, through a wireless network of signals representative of a group of data between a first telecommunication device which comprises $M_k$ antennas and a second telecommunication device, which comprises antennas **characterised in that** first telecommunication device comprises :

   - means for determining the propagation gains between the antennas of the first and second telecommunication devices,
   - means for determining, from the propagation gains, a linear transform of a dimension of $m_0 * M_k$ with $m_0 < M_k$.
   - means for transferring $m_0$ pilot signals to the second telecommunication device, the pilot signals being multiplied by the linear transform.
   and the second telecommunication device comprises :
   - means for obtaining from the received pilot signals a channel state information,
   - means for controlling the transfer of the signals representative of the group of data between the first and the second telecommunication devices according to the channel state information.

31. Computer program which can be directly loadable into a programmable device, comprising instructions or portions of code for implementing the steps of the method according to claims 1 to 19, when said computer program is executed on a programmable device.

32. Computer program which can be directly loadable into a programmable device, comprising instructions or portions of code for implementing the steps of the method according to claims 20 to 28, when said computer program is executed on a programmable device.

33. Signal transferred by a first telecommunication device to a second telecommunication device through a wireless network, the signal comprising a channel state information between a first telecommunication device which comprises antennas and a second telecommunication device which comprises antennas, **characterised in that** the channel state information is representative of a linear transform of a dimension of $m_0 * M_k$ determined from the propagation gains between the antennas of the first and second telecommunication devices.

Fig. 1

Fig. 2

MIMO
Channel matrix
Estimation module
350

$x'(p)$

$x(p)$ $M_k$

Downlink
Linear transform

$m_0$

TPC

310

UL
Direction
control

$M_k$

Uplink
Linear transform

$m_0$

$m_0$

335

305

325

205

## Fig. 3

10

400

Processor

403

RAM

405

Channel I/F

401

402

ROM

BSAnt1

BSAnt2

BSAntN

## Fig. 4

S500 — Receive pilot signals

S501 — Determine MIMO channel Downlink matrix

S502 — Determine interferences

S503 — Decomposition

S504 — Select values

S505 — Determine $V_{DL}$

S505b — Determine power

S506 — Apply

S507 — Determine CSI

S508 — Report

S508b — Transfer power information

S509 — Receive MCS

S510 — Apply MCS

## Fig. 5

S600 — Receive pilot signals

S601 — Determine MIMO channel uplink matrix

S602 — Determine interferences

S603 — Decomposition

S604 — Select values

S605 — Determine $V_{UL}$

S605b — Determine power

S606 — Apply

S607 — Transfer pilot signals

S607b — Transfer power information

S608 — Receive MCS/weights

S609 — Apply MCS/weights

## Fig. 6

S700 — Transfer pilot signals

S701 — Receive CSI downlink

S701b — Receive power information

S702 — Determine telecommunication device for downlink

S703 — Determine MCS for downlink

S704 — Determine weight for downlink

S705 — Transfer

## Fig. 7

S800 — Transfer pilot signals

S801 — Receive pilot signals

S802 — Determine CSI uplink

S802b — Receive power information

S803 — Determine telecommunication device for uplink

S804 — Determine MCS for uplink

S805 — Determine weight for uplink

S806 — Determine TPC for uplink

S807 — Transfer

## Fig. 8

**European Patent Office**

## EUROPEAN SEARCH REPORT

Application Number

EP 06 29 1045

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | SANAYEI S ET AL: "On the design of linear precoders for orthogonal space-time block codes with limited feedback" WIRELESS COMMUNICATIONS AND NETWORKING CONFERENCE, 2005 IEEE NEW ORLEANS, LA, USA 13-17 MARCH 2005, PISCATAWAY, NJ, USA,IEEE, 13 March 2005 (2005-03-13), pages 489-493, XP010791212 ISBN: 0-7803-8966-2 | 1,33 | INV. H04B7/06 H04L25/03 H04L1/06 |
| A | * page 490, column 1, last paragraph - column 2, paragraph 1 * * page 490; figure 1 * ----- | 2-32 | |
| P,X | PANDE T ET AL: "A weighted least squares approach to precoding with pilots for MIMO-OFDM" IEEE Transactions on Signal Processing IEEE USA, vol. 54, no. 10, 1 October 2006 (2006-10-01), pages 4067-4073, XP002409775 GB ISSN: 1053-587X * page 4069, columns 1-2 * ----- | 1 | TECHNICAL FIELDS SEARCHED (IPC) H04B H04L |

The present search report has been drawn up for all claims

| Place of search | Date of completion of the search | Examiner |
|---|---|---|
| The Hague | 30 November 2006 | Yang, Betty |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)